# EUROPEAN PATENT APPLICATION

(11) **EP 4 611 296 A1**
(43) Date of publication of application: **03.09.2025**
(21) Application number: 23881972.6
(22) Date of filing: 27.10.2023
(51) Int. Cl.: H04L 1/1812

(54) **METHOD AND DEVICE FOR NODE USED FOR WIRELESS COMMUNICATION**

(30) Priority: 28.10.2022 CN 202211334064
(71) Applicant: Apogee Networks, LLC, Dallas, TX 75201 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2023/127201
(87) International publication number: WO 2024/088397

(57) **Abstract**

The present application discloses a method and device for a node used for wireless communication. A first receiver receives first signaling; and a first transmitter sends a first PUCCH in a first time slot, wherein the first PUCCH carries a target HARQ-ACK bit block; the first signaling is used for determining the first time slot; a first change occasion comprises the time occupied by one first type configuration change, the first type configuration change comprises the change in frequency band resources, and the first type configuration change occurs in the same activated BWP; the target HARQ-ACK bit block depends on the chronological order among the first time slot, a target time slot, and the first change occasion, and the target time slot is a downlink time slot.

## Description

### Technical Field

This application relates to a transmission method and apparatus in a wireless communication system, and in particular, to a wireless signal transmission method and apparatus in a wireless communication system supporting a cellular network.

### Related Art

Network energy saving is very important for environment sustainability, reducing environmental impact, and saving operation costs. With a denser layout of wireless networks, use of more antennas, a higher bandwidth, use of more frequency bands, and continuous improvement of transmission data rates, network energy saving enhancement becomes an important aspect of 5G and future network development. How to process a HARQ-ACK (Hybrid automatic repeat request acknowledgement, hybrid automatic repeat request acknowledgement) feedback obtained after network energy saving enhancement is a necessary research topic.

### SUMMARY

In view of the foregoing problem, this application discloses a solution. It should be noted that, in the foregoing description, a scenario related to network energy saving enhancement is used as an example. This application is also applicable to other scenarios, for example, a scenario related to non-network energy saving enhancement, eMBB (Enhanced Mobile Broadband, enhanced mobile broadband), URLLC (Ultra Reliable and Low Latency Communication, ultra reliable and low latency communication), MBS (Multicast Broadcast Service, multicast broadcast service), IoT (Internet of Things, Internet of Things), Internet of Vehicles, NTN (non-terrestrial network, non-terrestrial network), and shared spectrum (shared spectrum), and achieves similar technical effects. In addition, using a unified solution in different scenarios (including but not limited to, a scenario related to network energy saving enhancement, a scenario related to non-network energy saving enhancement, eMBB, URLLC, MBS, IoT, Internet of Vehicles, NTN, and shared spectrum) further helps to reduce hardware complexity and costs, or improve performance. An embodiment for any node in this application and features in the embodiment may be applied to any other node if there is no conflict. The embodiments in this application and features in the embodiments may be combined with each other randomly if there is no conflict.

As an embodiment, for explanation of the terminology (Terminology) in this application, refer to definition in a TS36 series of 3GPP standard protocols.

As an embodiment, for explanation of the terminology in this application, refer to definition in a TS38 series of 3GPP standard protocols.

As an embodiment, for explanation of the terminology in this application, refer to definition in a TS37 series of 3GPP standard protocols.

As an embodiment, for explanation of the terminology in this application, refer to definition in IEEE (Institute of Electrical and Electronics Engineers, institute of electrical and electronics engineers) standard protocols.

This application discloses a method for a first node used for wireless communication, including:
receiving first signalling; and
sending a first PUCCH in a first slot, the first PUCCH carrying a target HARQ-ACK bit block, where
the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As an embodiment, benefits of the foregoing method include: improving HARQ-ACK feedback efficiency.

As an embodiment, benefits of the foregoing method include: reducing HARQ-ACK feedback overheads.

As an embodiment, benefits of the foregoing method include: simplifying a system design, and reducing complexity on a network side.

As an embodiment, benefits of the foregoing method include: reducing energy consumption of a base station and a terminal.

As an embodiment, benefits of the foregoing method include: reducing operating costs.

As an embodiment, benefits of the foregoing method include: improving a resource utilization rate.

As an embodiment, benefits of the foregoing method include: being of good compatibility.

As an embodiment, benefits of the foregoing method include: being of small modifications to the existing 3GPP standard.

According to an aspect of this application, in the foregoing method:
the target HARQ-ACK bit block depends on a target feature occasion set, the target feature occasion set includes at least one feature occasion, and the target feature occasion set depends on the chronological order among the first slot, the target slot, and the first change occasion.

According to an aspect of this application, in the foregoing method:
a cardinality of the target feature occasion set is used for determining the target HARQ-ACK bit block.

According to an aspect of this application, in the foregoing method:
a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

According to an aspect of this application, in the foregoing method:
in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

According to an aspect of this application, in the foregoing method:
an information element BWP-Downlink used for configuring the same active BWP includes a first parameter set, and within the same active BWP, parameters in the first parameter set are used before and after the first-type configuration change occurs.

As an embodiment, benefits of the foregoing method include: a delay (delay) generated when a configuration change occurs is effectively reduced, thereby improving system efficiency.

As an embodiment, benefits of the foregoing method include: overheads of control signalling are reduced.

According to an aspect of this application, in the foregoing method:
an information element BWP-Uplink used for configuring the same active BWP includes a first parameter set, and within the same active BWP, parameters in the first parameter set are used before and after the first-type configuration change occurs.

As an embodiment, benefits of the foregoing method include: a delay (delay) generated when a configuration change occurs is effectively reduced, thereby improving system efficiency.

As an embodiment, benefits of the foregoing method include: overheads of control signalling are reduced.

According to an aspect of this application, in the foregoing method:
a plurality of frequency band resources are configured for the same active BWP, and the first-type configuration change includes switching between the plurality of frequency band resources within the same active BWP.

This application discloses a method for a second node used for wireless communication, including:
sending first signalling; and
receiving a first PUCCH in a first slot, the first PUCCH carrying a target HARQ-ACK bit block, where
the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

According to an aspect of this application, in the foregoing method:
the target HARQ-ACK bit block depends on a target feature occasion set, the target feature occasion set includes at least one feature occasion, and the target feature occasion set depends on the chronological order among the first slot, the target slot, and the first change occasion.

According to an aspect of this application, in the foregoing method:
a cardinality of the target feature occasion set is used for determining the target HARQ-ACK bit block.

According to an aspect of this application, in the foregoing method:
a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

According to an aspect of this application, in the foregoing method:
in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

According to an aspect of this application, in the foregoing method:
an information element BWP-Downlink used for configuring the same active BWP includes a first parameter set, and within the same active BWP, parameters in the first parameter set are used before and after the first-type configuration change occurs.

According to an aspect of this application, in the foregoing method:
an information element BWP-Uplink used for configuring the same active BWP includes a first parameter set, and within the same active BWP, parameters in the first parameter set are used before and after the first-type configuration change occurs.

According to an aspect of this application, in the foregoing method:
a plurality of frequency band resources are configured for the same active BWP, and the first-type configuration change includes switching between the plurality of frequency band resources within the same active BWP.

This application discloses a first node used for wireless communication, including:
a first receiver, configured to receive first signalling; and
a first transmitter, configured to send a first PUCCH in a first slot, the first PUCCH carrying a target HARQ-ACK bit block, where
the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

This application discloses a second node used for wireless communication, including:
a second transmitter, configured to send first signalling; and
a second receiver, configured to receive a first PUCCH in a first slot, the first PUCCH carrying a target HARQ-ACK bit block, where
the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

### BRIEF DESCRIPTION OF THE DRAWINGS

Other features, objectives, and advantages of this application will become more obvious by reading detailed descriptions of non-restrictive embodiments with reference to the following accompanying drawings.
FIG. 1 is a flowchart of processing a first node according to an embodiment of this application;
FIG. 2 is a schematic diagram of a network architecture according to an embodiment of this application;
FIG. 3 is a schematic diagram of a radio protocol architecture of a user plane and a control plane according to an embodiment of this application;
FIG. 4 is a schematic diagram of a first communication device and a second communication device according to an embodiment of this application;
FIG. 5 is a flowchart of signal transmission according to an embodiment of this application;
FIG. 6 is a schematic diagram of a relationship between a target HARQ-ACK bit block and a target feature occasion set according to an embodiment of this application;
FIG. 7 is a schematic diagram of a relationship between a target feature occasion set and a chronological order among a first slot, a target slot, and a first change occasion according to an embodiment of this application;
FIG. 8 is a schematic diagram in which a target feature occasion set depends on a chronological order among a first slot, a target slot, and a first change occasion according to an embodiment of this application;
FIG. 9 is a schematic diagram of a relationship between a target feature occasion set and a first condition set according to an embodiment of this application;
FIG. 10 is a schematic diagram of a first condition set according to an embodiment of this application;
FIG. 11 is a schematic diagram of a relationship among a first-type configuration change, a same active BWP, and a first parameter set according to an embodiment of this application;
FIG. 12 is a schematic diagram of a relationship among a first-type configuration change, a same active BWP, and a first parameter set according to an embodiment of this application;
FIG. 13 is a schematic diagram of a relationship among a first-type configuration change, a same active BWP, and a plurality of frequency band resources according to an embodiment of this application;
FIG. 14 is a structural block diagram of a processing apparatus in a first node device according to an embodiment of this application; and
FIG. 15 is a structural block diagram of a processing apparatus in a second node device according to an embodiment of this application.

### DETAILED DESCRIPTION

Technical solutions of this application are further explained in detail with reference to the accompanying drawings below. It should be noted that, the embodiments in this application and features in the embodiments may be combined with each other randomly if there is no conflict.

### Embodiment 1

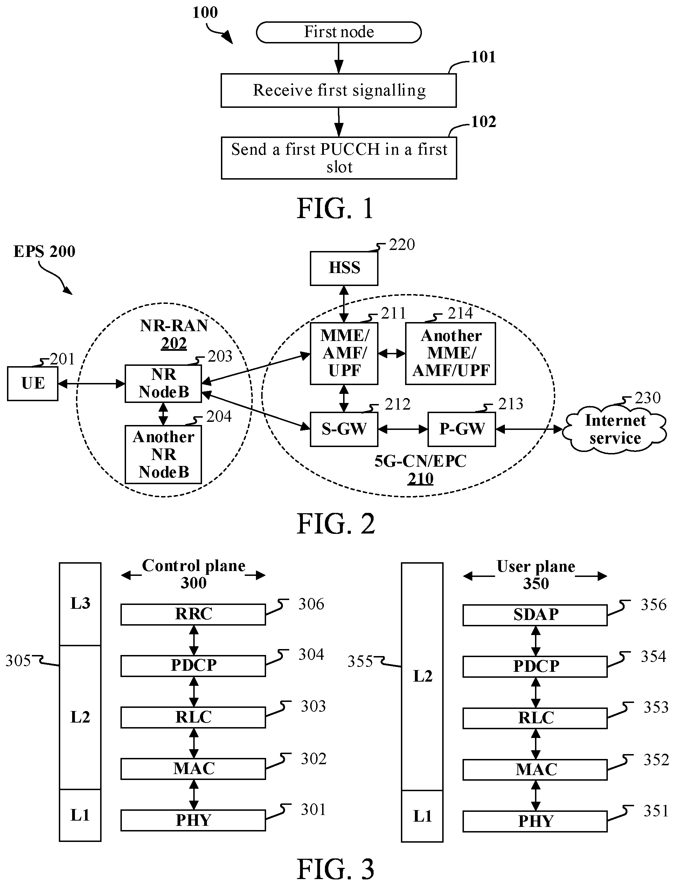

Embodiment 1 illustrates a processing flowchart of a first node according to an embodiment of this application, as shown in FIG. 1.

In Embodiment 1, the first node in this application receives first signalling in step 101; and in step 102, a first PUCCH is sent in a first slot.

In Embodiment 1, the first PUCCH carries a target HARQ-ACK bit block; the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As an embodiment, the first signalling schedules at least one PDSCH (Physical downlink shared channel, physical downlink shared channel) reception.

As an embodiment, the target HARQ-ACK bit block includes at least one HARQ-ACK bit for a transport block in the PDSCH reception scheduled by the first signalling.

As an embodiment, the target HARQ-ACK bit block includes at least one HARQ-ACK bit indicating whether a transport block in the PDSCH reception scheduled by the first signalling is correctly decoded.

As an embodiment, the first signalling triggers one HARQ-ACK information report and does not schedule PDSCH reception.

As an embodiment, the first signalling has associated HARQ-ACK information and does not schedule PDSCH reception.

As an embodiment, the first signalling indicates SPS (Semi-persistent scheduling, semi-persistent scheduling) PDSCH release.

As an embodiment, the first signalling indicates TCI (Transmission Configuration Indicator, transmission configuration indicator) status update.

As an embodiment, the first signalling is dynamically configured.

As an embodiment, the first signalling includes signalling at layer 1 (L1).

As an embodiment, the first signalling includes control signalling at layer 1 (L1).

As an embodiment, the first signalling includes physical layer (Physical Layer) signalling.

As an embodiment, the first signalling includes one or more fields (Field) in physical layer signalling.

As an embodiment, the first signalling includes higher layer (Higher Layer) signalling.

As an embodiment, the first signalling includes one or more fields in higher layer signalling.

As an embodiment, the first signalling is RRC (Radio Resource Control, radio resource control) signalling.

As an embodiment, the first signalling is a MAC CE (Medium Access Control layer Control Element, medium access control layer control element).

As an embodiment, the first signalling includes one or more fields in RRC signalling.

As an embodiment, the first signalling includes at least one MAC CE.

As an embodiment, the first signalling includes DCI (Downlink Control Information, downlink control information).

As an embodiment, the first signalling is in a DCI format (DCI format).

As an embodiment, the first signalling includes at least one field in a DCI format.

As an embodiment, the first signalling includes SCI (Sidelink Control Information, sidelink control information).

As an embodiment, the first signalling includes one or more fields in one piece of SCI.

As an embodiment, the first signalling includes one or more fields in an IE (Information Element, information element).

As an embodiment, the first signalling is downlink grant signalling (DownLink Grant Signalling).

As an embodiment, the first signalling is transmitted on a downlink physical layer control channel (that is, a downlink channel that can be used only to carry physical layer signalling).

As an embodiment, the downlink physical layer control channel in this application is a PDCCH (Physical Downlink Control CHannel, physical downlink control channel).

As an embodiment, the downlink physical layer control channel in this application is an sPDCCH (short PDCCH, short PDCCH).

As an embodiment, the downlink physical layer control channel in this application is an NB-PDCCH (Narrow Band PDCCH, narrow band PDCCH).

As an embodiment, the first signalling is DCI format 1_0.

As an embodiment, the first signalling is DCI format 1_1.

As an embodiment, the first signalling is DCI format 1_2.

As an embodiment, the first signalling is DCI format 1_3.

As an embodiment, the first signalling is DCI format 1_4.

As an embodiment, the first signalling is DCI format 1_5.

As an embodiment, the first signalling is DCI format 4_1.

As an embodiment, the first signalling is DCI format 4_2.

As an embodiment, the first slot includes a plurality of multi-carrier symbols.

As an embodiment, the multi-carrier symbol in this application is an OFDM (Orthogonal Frequency Division Multiplexing, orthogonal frequency division multiplexing) symbol (Symbol).

As an embodiment, the multi-carrier symbol in this application is an SC-FDMA (Single Carrier-Frequency Division Multiple Access, single carrier-frequency division multiple access) symbol.

As an embodiment, the multi-carrier symbol in this application is a DFT-S-OFDM (Discrete Fourier Transform Spread OFDM, discrete Fourier transform spread OFDM) symbol.

As an embodiment, the multi-carrier symbol in this application is an FBMC (Filter Bank Multi Carrier, filter bank multi carrier) symbol.

As an embodiment, the multi-carrier symbol in this application includes a CP (Cyclic Prefix, cyclic prefix).

As an embodiment, the first slot is an uplink (Uplink, UL) slot (slot).

As an embodiment, the first slot is a PUCCH slot.

As an embodiment, the first slot is a slot indicated by a DCI format.

As an embodiment, the first slot is a slot used for sending the first PUCCH.

As an embodiment, the first PUCCH is a PUCCH (Physical uplink control channel, physical uplink control channel) used for sending HARQ-ACK information.

As an embodiment, the expression "sending a first PUCCH in a first slot, the first PUCCH carrying a target HARQ-ACK bit block" includes: in the first slot, the target HARQ-ACK bit block is sent in the first PUCCH.

As an embodiment, the expression "sending a first PUCCH in a first slot, the first PUCCH carrying a target HARQ-ACK bit block" includes: HARQ-ACK information represented by the target HARQ-ACK bit block is provided in the first PUCCH, and the first slot is a slot occupied for sending the first PUCCH.

As an embodiment, the expression "sending a first PUCCH in a first slot, the first PUCCH carrying a target HARQ-ACK bit block" includes: in the first slot, after at least channel coding, the target HARQ-ACK bit block is sent in the first PUCCH.

As an embodiment, the expression "sending a first PUCCH in a first slot, the first PUCCH carrying a target HARQ-ACK bit block" includes: in the first slot, after at least channel coding (Channel coding), scrambling (Scrambling), modulation (Modulation), and mapping to physical resources (Mapping to physical resources), the target HARQ-ACK bit block is sent in the first PUCCH.

As an embodiment, the expression "sending a first PUCCH in a first slot, the first PUCCH carrying a target HARQ-ACK bit block" includes: in the first slot, after at least sequence generation and mapping to physical resources, the target HARQ-ACK bit block is sent in the first PUCCH.

As an embodiment, the expression "sending a first PUCCH in a first slot, the first PUCCH carrying a target HARQ-ACK bit block" includes: in the first slot, after at least sequence modulation and mapping to physical resources, the target HARQ-ACK bit block is sent in the first PUCCH.

As an embodiment, the target HARQ-ACK bit block is sent in the first PUCCH.

As an embodiment, HARQ-ACK information represented by the target HARQ-ACK bit block is provided in the first PUCCH.

As an embodiment, after at least channel coding, the target HARQ-ACK bit block is sent in the first PUCCH.

As an embodiment, after at least channel coding (Channel coding), scrambling (Scrambling), modulation (Modulation), and mapping to physical resources (Mapping to physical resources), the target HARQ-ACK bit block is sent in the first PUCCH.

As an embodiment, after at least sequence generation and mapping to physical resources, the target HARQ-ACK bit block is sent in the first PUCCH.

As an embodiment, after at least sequence modulation and mapping to physical resources, the target HARQ-ACK bit block is sent in the first PUCCH.

As an embodiment, the target HARQ-ACK bit block includes at least one HARQ-ACK bit (bit).

As an embodiment, the target HARQ-ACK bit block includes a HARQ-ACK codebook (codebook).

As an embodiment, the target HARQ-ACK bit block includes a type-1 HARQ-ACK codebook (Type-1 HARQ-ACK codebook).

As an embodiment, the expression that the first signalling is used for determining the first slot includes: the first signalling indicates the first slot.

As an embodiment, the first slot depends on the indication of the first signalling.

As an embodiment, the first slot is an uplink slot n + k, n is a last uplink slot that is used for PUCCH transmission and that is overlapped with one PDSCH reception, and k is indicated by the first signalling.

As an embodiment, the first slot is an uplink slot n + k, n is a last uplink slot that is used for PUCCH transmission and that is overlapped with a downlink (Downlink, DL) slot used for one PDSCH reception, and k is indicated by a PDSCH-to-HARQ feedback timing indicator (PDSCH-to-HARQ_feedback timing indicator) field in the first signalling.

As an embodiment, the first signalling is used for configuring the first slot.

As an embodiment, the first change occasion is a slot.

As an embodiment, the first change occasion includes at least one slot.

As an embodiment, the expression that a first change occasion includes the time occupied by one first-type configuration change includes: the first change occasion includes a slot occupied by the one first-type configuration change.

As an embodiment, the first change occasion includes duration (duration) occupied by the first-type configuration change.

As an embodiment, the first change occasion includes duration (duration) occupied from start to end of the one first-type configuration change.

As an embodiment, the first change occasion is continuous duration.

As an embodiment, the one first-type configuration change occurs in the first change occasion.

As an embodiment, the one first-type configuration change starts in the first change occasion.

As an embodiment, the one first-type configuration change ends in the first change occasion.

As an embodiment, the expression that the first-type configuration change occurs in a same active BWP includes: the first-type configuration change does not trigger a BWP change (BWP change).

As an embodiment, the expression that the first-type configuration change occurs in a same active BWP includes: the first-type configuration change does not include a BWP change (BWP change).

As an embodiment, the expression that the first-type configuration change occurs in a same active BWP includes: the first-type configuration change does not involve a BWP change (BWP change).

As an embodiment, the expression that the first-type configuration change occurs in a same active BWP includes: active frequency domain resources before and after the first-type configuration change occurs belong to the same active BWP.

As an embodiment, the expression that the first-type configuration change occurs in a same active BWP includes: all changes included in the first-type configuration change are changes between parameters configured within the same active (active) BWP (Bandwidth part, bandwidth part).

As an embodiment, the first-type configuration change includes a change in a configuration for a PDSCH.

As an embodiment, the first-type configuration change includes a change in a configuration for a PDCCH (Physical downlink control channel, physical downlink control channel).

As an embodiment, the first-type configuration change includes a change in a configuration for DL SPS.

As an embodiment, the first-type configuration change includes a change in a configuration for a PUCCH.

As an embodiment, the first-type configuration change includes a change in a configuration for a PUSCH (Physical uplink shared channel, physical uplink shared channel).

As an embodiment, the first-type configuration change includes a change in a configuration for configured grant (Configured Grant).

As an embodiment, the first-type configuration change includes switching between two pdcch-Config.

As an embodiment, the first-type configuration change includes switching between two pdsch-Config.

As an embodiment, the first-type configuration change includes switching between two pucch-Config.

As an embodiment, the first-type configuration change includes switching between two pusch-Config.

As an embodiment, the first-type configuration change includes switching between two configuration sets for DL SPS.

As an embodiment, the first-type configuration change includes switching between two configuration sets for configured grant (Configured Grant).

As an embodiment, the first-type configuration change includes switching between two configuration sets for a PDSCH.

As an embodiment, the first-type configuration change includes switching between two configuration sets for a PDCCH.

As an embodiment, the first-type configuration change includes switching between two configuration sets for a PUCCH.

As an embodiment, the first-type configuration change includes switching between two configuration sets for a PUSCH.

As an embodiment, the frequency band resource includes at least one of a frequency domain location (Frequency domain location) and a bandwidth (bandwidth).

As an embodiment, the first-type configuration change includes switching of frequency domain locations.

As an embodiment, the first-type configuration change includes switching of bandwidths.

As an embodiment, the expression that the first-type configuration change includes a change of a frequency band resource includes: the first-type configuration change includes switching between sets of resource blocks.

As an embodiment, the expression that the first-type configuration change includes a change of a frequency band resource includes: the first-type configuration change includes switching between sets of physical resource blocks.

As an embodiment, the change of the frequency band resource includes: a change of a quantity of resource blocks (Resource Blocks, RBs).

As an embodiment, the change of the frequency band resource includes: a change of a quantity of physical resource blocks (Physical resource blocks, PRBs).

As an embodiment, the change of the frequency band resource includes: a change of a quantity of active resource blocks.

As an embodiment, the change of the frequency band resource includes: a change of a quantity of active physical resource blocks.

As an embodiment, the change of the frequency band resource includes: a change of a quantity of resource blocks used for transmitting one or more of a PBCH, an SS, an SSB, a PDSCH, a PDCCH, a PUSCH, a PUCCH, an RS, and a PRACH.

As an embodiment, the change of the frequency band resource includes: a change of a quantity of physical resource blocks used for transmitting one or more of a PBCH (Physical broadcast channel, physical broadcast channel), an SS (synchronization signal, synchronization signal), an SSB (SS/PBCH block), a PDSCH, a PDCCH, a PUSCH, a PUCCH, an RS (Reference signal, reference signal), and a PRACH (Physical random access channel, physical random access channel).

As an embodiment, the chronological order among the first slot, the target slot, and the first change occasion includes: a chronological order between the first slot and the first change occasion, and a chronological order between the target slot and the first change occasion.

As an embodiment, the chronological order among the first slot, the target slot, and the first change occasion includes: whether the first slot is before the first change occasion, and whether the target slot is before the first change occasion.

As an embodiment, the expression "the target HARQ-ACK bit block depends on the chronological order among the first slot, the target slot, and the first change occasion" includes:
the target HARQ-ACK bit block depends on a target feature occasion set, the target feature occasion set includes at least one feature occasion, and the target feature occasion set depends on the chronological order among the first slot, the target slot, and the first change occasion.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; in a process of determining the target feature occasion set: for the target slot timing value, whether to skip an operation of adding a feature occasion for a target index depends on whether a condition in the first condition set is satisfied; and the first condition set includes: the first slot is not before the first change occasion, and the target slot is before the first change occasion; and the target slot is associated with the target index and the target slot timing value.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion; and the target slot is associated with the target index and the target slot timing value.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; for the target slot timing value, whether to skip an operation of adding a feature occasion to the target feature occasion set for the target index depends on the chronological order among the first slot, the target slot, and the first change occasion; and the target slot is associated with the target index and the target slot timing value.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; for the target slot timing value, whether to skip an operation of adding a feature occasion to the target feature occasion set for the target index depends on whether a condition in the first condition set is satisfied; and the first condition set includes: the first slot is not before the first change occasion, and the target slot is before the first change occasion; and the target slot is associated with the target index and the target slot timing value.

As an embodiment, the expression "the target HARQ-ACK bit block depends on the chronological order among the first slot, the target slot, and the first change occasion" includes:
the target HARQ-ACK bit block depends on a target feature occasion set, and the target feature occasion set includes at least one feature occasion; a target slot timing value is one in a slot timing value set; for the target slot timing value, the operation of adding a feature occasion to the target feature occasion set for the target index is skipped if any condition in a first condition set is satisfied; and the first condition set includes: the first slot is not before the first change occasion, and the target slot is before the first change occasion; and the target slot is associated with the target index and the target slot timing value.

As an embodiment, the expression "the target HARQ-ACK bit block depends on the chronological order among the first slot, the target slot, and the first change occasion" includes:
a chronological order between the first slot and the first change occasion, together with a chronological order between the target slot and the first change occasion indicate bits included in the target HARQ-ACK bit block.

As an embodiment, the expression "the target HARQ-ACK bit block depends on the chronological order among the first slot, the target slot, and the first change occasion" includes:
a chronological order between the first slot and the first change occasion, together with a chronological order between the target slot and the first change occasion indicate a size (size) of the target HARQ-ACK bit block.

As an embodiment, the expression "the target HARQ-ACK bit block depends on the chronological order among the first slot, the target slot, and the first change occasion" includes:
an order of the first slot, the target slot, and the first change occasion in time domain indicates bits included in the target HARQ-ACK bit block.

As an embodiment, the expression "the target HARQ-ACK bit block depends on the chronological order among the first slot, the target slot, and the first change occasion" includes:
an order of the first slot, the target slot, and the first change occasion in time domain indicates an order of bits included in the target HARQ-ACK bit block.

As an embodiment, the target HARQ-ACK bit block is related to the chronological order among the first slot, the target slot, and the first change occasion.

### Embodiment 2

Embodiment 2 illustrates a schematic diagram of a network architecture according to this application, as shown in FIG. 2.

FIG. 2 is a diagram of a network architecture 200 of 5G NR, LTE (Long-Term Evolution, Long-Term Evolution), and LTE-A (Long-Term Evolution Advanced, Long-Term Evolution Advanced) system. The 5G NR or LTE network architecture 200 may be referred to as an EPS (Evolved Packet System, evolved packet system) 200, or some other proper terms. The EPS 200 may include one or more UEs (User Equipment, user equipment) 201, an NG-RAN (next generation radio access network) 202, an EPC (Evolved Packet Core, evolved packet core)/5G-CN (5G-Core Network, 5G-core network) 210, an HSS (Home Subscriber Server, home subscriber server) 220, and an Internet service 230. The EPS may be interconnected to other access networks, but for simplicity, these entities/interfaces are not shown. As shown in the figure, the EPS provides a packet switching service. However, persons skilled in the art will easily understand that various concepts presented throughout this application may be extended to a network providing a circuit switch service or another cellular network. The NG-RAN includes an NR NodeB (gNB) 203 and another gNB 204. The gNB 203 provides user and control plane protocol termination towards the UE 201. The gNB 203 may be connected to another gNB 204 via an Xn interface (for example, a backhaul). The gNB 203 may also be referred to as a base station, a base transceiver station, a radio base station, a radio transceiver, a transceiver function, a basic service set (BSS), an extended service set (ESS), a TRP (transmitter receiver point), or some other proper terms. The gNB 203 provides an access point to the EPC/5G-CN 210 for the UE 201. An example of the UE 201 includes a cellular phone, a smartphone, a session initiation protocol (SIP) phone, a laptop computer, a personal digital assistant (PDA), satellite radio, non-terrestrial base station communication, satellite mobile communication, a global positioning system, a multimedia apparatus, a video apparatus, a digital audio player (for example, an MP3 player), a camera, a game console, an unmanned aerial vehicle, an aircraft, a narrow band Internet of Things device, a machine-type communication device, land transportation, an automobile, a wearable device, or any other similar functional apparatus. Persons skilled in the art may alternatively refer to the UE 201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other proper terms. The gNB 203 is connected to the EPC/5G-CN 210 through an S1/NG interface. The EPC/5G-CN 210 includes an MME (Mobility Management Entity, mobility management entity)/AMF (Authentication Management Field, authentication management field)/UPF (User Plane Function, user plane function) 211, another MME/AMF/UPF 214, an S-GW (Service Gateway, service gateway) 212, and a P-GW (Packet Date Network Gateway, packet data network gateway) 213. The MME/AMF/UPF 211 is a control node that processes signalling between the UE 201 and the EPC/5G-CN 210. Generally, the MME/AMF/UPF 211 provides bearer and connection management. All user IP (Internet Protocol, Internet Protocol) packets are delivered by using the S-GW 212, and the S-GW 212 is connected to the P-GW 213. The P-GW 213 provides UE IP address assignment and other functions. The P-GW 213 is connected to the Internet service 230. The Internet service 230 includes an Internet Protocol service corresponding to an operator, and may specifically include the Internet, an intranet, an IMS (IP Multimedia Subsystem, IP multimedia subsystem), and a packet switching streaming service.

As an embodiment, the UE 201 corresponds to the first node in this application.

As an embodiment, the UE 201 corresponds to the second node in this application.

As an embodiment, the UE 201 is UE.

As an embodiment, the UE 201 is UE supporting multicast transmission.

As an embodiment, the UE 201 is regular UE.

As an embodiment, the gNB 203 corresponds to the first node in this application.

As an embodiment, the gNB 203 corresponds to the second node in this application.

As an embodiment, the UE 201 corresponds to the first node in this application, and the gNB 203 corresponds to the second node in this application.

As an embodiment, the gNB 203 is a macrocellular (MarcoCellular) base station.

As an embodiment, the gNB 203 is a micro cell (Micro Cell) base station.

As an embodiment, the gNB 203 is a picocell (PicoCell) base station.

As an embodiment, the gNB 203 is a home base station (Femtocell).

As an embodiment, the gNB 203 is a base station device supporting a large delay difference.

As an embodiment, the gNB 203 is a flight platform device.

As an embodiment, the gNB 203 is a satellite device.

As an embodiment, the gNB 203 is a base station for enabling network energy saving enhancement.

As an embodiment, both the first node and the second node in this application correspond to the UE 201. For example, the first node and the second node perform V2X communication between each other.

### Embodiment 3

Embodiment 3 shows a schematic diagram of an embodiment of a radio protocol architecture of a user plane and a control plane according to this application, as shown in FIG. 3. FIG. 3 is a schematic diagram of an embodiment of a radio protocol architecture used for a user plane 350 and a control plane 300. FIG. 3 shows, by using three layers, a radio protocol architecture used for a first communication node device (UE, an RSU in a gNB or a V2X) and a second communication node device (a gNB, an RSU in UE or a V2X), or a radio protocol architecture used for a control plane 300 between two UEs: layer 1, layer 2, and layer 3. Layer 1 (L1 layer) is a lowest layer at which various PHY (physical layer) signal processing functions are implemented. The L1 layer is referred to as a PHY 301 in this specification. Layer 2 (L2 layer) 305 is above the PHY 301, and is responsible for links between the first communication node device and the second communication node device, and between two UEs through the PHY 301. L2 layer 305 includes a MAC (Media Access Control, media access control) sublayer 302, an RLC (Radio Link Control, radio link control) sublayer 303, and a PDCP (Packet Data Convergence Protocol, packet data convergence protocol) sublayer 304. These sublayers terminate at the second communication node device. The PDCP sublayer 304 provides multiplexing between different radio bearers and logical channels. The PDCP sublayer 304 further provides security by encrypting a data packet, and provides inter-cell mobility support between the second communication node devices for the first communication node device. The RLC sublayer 303 provides segmentation and reassembly of an upper-layer data packet, retransmission of a lost data packet, and rearrangement of a data packet, to compensate for unordered reception caused by a HARQ. The MAC sublayer 302 provides multiplexing between a logical channel and a transmission channel. The MAC sublayer 302 is further responsible for allocating various radio resources (for example, resource blocks) in a cell between first communication node devices. The MAC sublayer 302 is further responsible for a HARQ operation. An RRC (Radio Resource Control, radio resource control) sublayer 306 in layer 3 (L3 layer) in the control plane 300 is responsible for obtaining a radio resource (that is, a radio bearer) and configuring a lower layer by using RRC signalling between the second communication node device and the first communication node device. A radio protocol architecture of the user plane 350 includes layer 1 (L1 layer) and layer 2 (L2 layer). The radio protocol architecture that is in the user plane 350 and that is used for the first communication node device and the second communication node device is basically the same as a corresponding layer and a sublayer in the control plane 300 for the physical layer 351, the PDCP sublayer 354 in the L2 layer 355, the RLC sublayer 353 in the L2 layer 355, and the MAC sublayer 352 in the L2 layer 355, but the PDCP sublayer 354 also provides header compression for the upper-layer data packet, to reduce radio transmission overheads. The L2 layer 355 in the user plane 350 further includes an SDAP (Service Data Adaptation Protocol, service data adaptation protocol) sublayer 356, and the SDAP sublayer 356 is responsible for mapping between a QoS flow and a data radio bearer (DRB, Data Radio Bearer), to support diversity of services. Although not shown in the figure, the first communication node device may have several upper layers above the L2 layer 355, including a network layer (for example, an IP layer) terminated at a P-GW on a network side and an application layer terminated at another connected end (for example, remote UE or a server).

As an embodiment, the radio protocol architecture in FIG. 3 is applicable to the first node in this application.

As an embodiment, the radio protocol architecture in FIG. 3 is applicable to the second node in this application.

As an embodiment, the first signalling in this application is generated in the RRC sublayer 306.

As an embodiment, the first signalling in this application is generated in the MAC sublayer 302.

As an embodiment, the first signalling in this application is generated in the PHY 301.

As an embodiment, the first PUCCH in this application is generated in the PHY 301.

As an embodiment, a PDSCH in this application is generated in the PHY 301.

### Embodiment 4

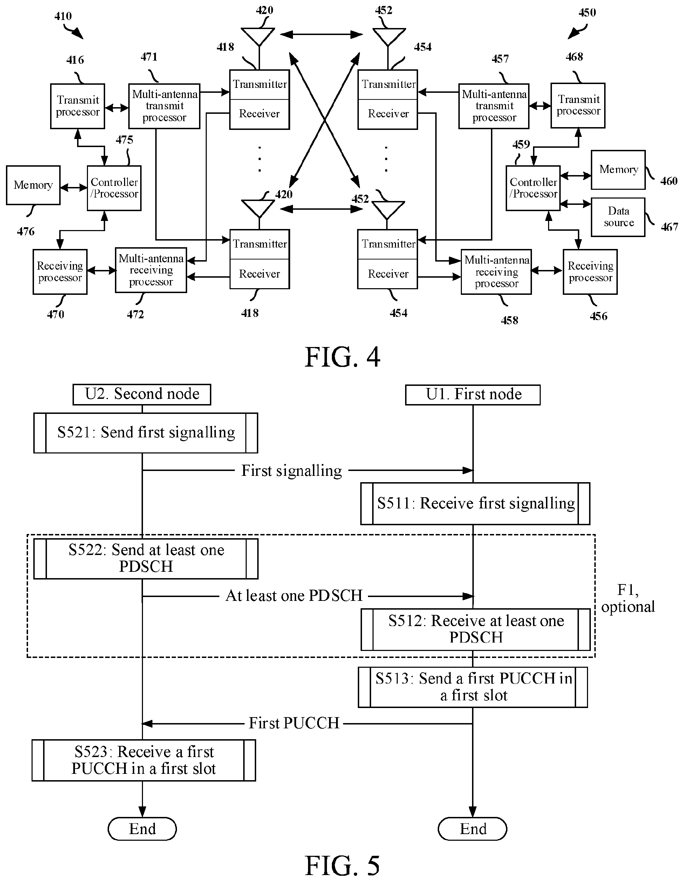

Embodiment 4 shows a schematic diagram of a first communication device and a second communication device according to this application, as shown in FIG. 4. FIG. 4 is a block diagram of a first communication device 410 and a second communication device 450 communicating with each other in an access network.

The first communication device 410 includes a controller/processor 475, a memory 476, a receiving processor 470, a transmit processor 416, a multi-antenna receiving processor 472, a multi-antenna transmit processor 471, a transmitter/receiver 418, and an antenna 420.

The second communication device 450 includes a controller/processor 459, a memory 460, a data source 467, a transmit processor 468, a receiving processor 456, a multi-antenna transmit processor 457, a multi-antenna receiving processor 458, a transmitter/receiver 454, and an antenna 452.

During transmission from the first communication device 410 to the second communication device 450, at the first communication device 410, an upper-layer data packet from a core network is provided for the controller/processor 475. The controller/processor 475 implements functionality of the L2 layer. During transmission from the first communication device 410 to the first communication device 450, the controller/processor 475 provides header compression, encryption, packet segmentation and reordering, multiplexing between logical and transmission channels, and radio resource allocation to the second communication device 450 based on various priority measures. The controller/processor 475 is further responsible for retransmission of a lost packet and signalling to the second communication device 450. The transmit processor 416 and the multi-antenna transmit processor 471 implement various signal processing functions for the L1 layer (that is, the physical layer). The transmit processor 416 implements coding and interleaving to promote forward error correction (FEC) at the second communication device 450, and mapping of a signal cluster based on various modulation schemes (for example, binary phase shift keying (BPSK), quadrature phase shift keying (QPSK), M-phase shift keying (M-PSK), and M-quadrature amplitude modulation (M-QAM)). The multi-antenna transmit processor 471 performs digital space precoding on coded and modulated symbols, including codebook-based precoding and non-codebook-based precoding, and beam forming processing, to generate one or more spatial flows. The transmit processor 416 subsequently maps each spatial flow to a subcarrier, multiplexes the spatial flow with a reference signal (for example, a pilot) in time domain and/or frequency domain, and then uses inverse fast Fourier transform (IFFT) to generate a physical channel carrying a time domain multi-carrier symbol stream. Subsequently, the multi-antenna transmit processor 471 performs a sending analog precoding/beam forming operation on the time domain multi-carrier symbol stream. Each transmitter 418 converts a baseband multi-carrier symbol stream provided by the multi-antenna transmit processor 471 into a radio frequency stream, and then provides the radio frequency stream to different antennas 420.

During transmission from the first communication device 410 to the second communication device 450, at the second communication device 450, each receiver 454 receives a signal through a corresponding antenna 452. Each receiver 454 recovers information modulated onto a radio frequency carrier, converts a radio frequency stream into a baseband multi-carrier symbol stream, and provides the baseband multi-carrier symbol stream for the receiving processor 456. The receiving processor 456 and the multi-antenna receiving processor 458 implement various signal processing functions of the L1 layer. The multi-antenna receiving processor 458 performs a receiving analog precoding/beam forming operation on a baseband multi-carrier symbol stream from the receiver 454. The receiving processor 456 converts, from time domain to frequency domain by using fast Fourier transform (FFT), the baseband multi-carrier symbol stream on which the receiving analog precoding/beam forming operation is performed. In frequency domain, a data signal and a reference signal at the physical layer are demultiplexed by the receiving processor 456, where the reference signal is used for channel estimation, and after multi-antenna detection is performed on the data signal in the multi-antenna receiving processor 458, any spatial flow that uses the second communication device 450 as a destination is recovered. A symbol in each spatial flow is demodulated and recovered in the receiving processor 456, and a soft decision is generated. Subsequently, the receiving processor 456 decodes and deinterleaves the soft decision to recover the upper-layer data and the control signal transmitted by the first communication device 410 on the physical channel. Subsequently, the upper-layer data and the control signal are provided for the controller/processor 459. The controller/processor 459 implements a function of the L2 layer. The controller/processor 459 may be associated with the memory 460 that stores program code and data. The memory 460 may be referred to as a computer readable medium. During transmission from the first communication device 410 to the second communication device 450, the controller/processor 459 provides demultiplexing, packet reassembly, decryption, header decompression, and control signal processing between transmission and logical channels, to recover an upper-layer data packet from the core network. Subsequently, the upper-layer data packet is provided for all protocol layers above the L2 layer. Various control signals may alternatively be provided for L3 for L3 processing.

During transmission from the second communication device 450 to the first communication device 410, the data source 467 is used at the second communication device 450 to provide the upper-layer data packet for the controller/processor 459. The data source 467 indicates all protocol layers above the L2 layer. Similar to a sending function at the first communication device 410 described in transmission from the first communication device 410 to the second communication device 450, the controller/processor 459 implements, based on radio resource allocation, header compression, encryption, packet segmentation and reordering, and multiplexing between logical and transmission channels, and implements a function of an L2 layer for a user plane and a control plane. The controller/processor 459 is further responsible for retransmission of a lost packet and signalling to the first communication device 410. The transmit processor 468 performs modulation mapping and channel coding processing. The multi-antenna transmit processor 457 performs digital multi-antenna space precoding, including codebook-based precoding and non-codebook-based precoding, and beam forming processing. Subsequently, the transmit processor 468 modulates a generated spatial flow into a multi-carrier/single-carrier symbol stream. The multi-carrier/single-carrier symbol stream on which an analog precoding/beam forming operation is performed in the multi-antenna transmit processor 457 is provided by the transmitter 454 for different antennas 452. Each transmitter 454 first converts a baseband symbol stream provided by the multi-antenna transmit processor 457 into a radio frequency symbol stream, and then provides the radio frequency symbol stream for the antenna 452.

During transmission from the second communication device 450 to the first communication device 410, a function at the first communication device 410 is similar to a receiving function at the second communication device 450 described during transmission from the first communication device 410 to the second communication device 450. Each receiver 418 receives a radio frequency signal through a corresponding antenna 420, converts the received radio frequency signal into a baseband signal, and provides the baseband signal for the multi-antenna receiving processor 472 and the receiving processor 470. The receiving processor 470 and the multi-antenna receiving processor 472 jointly implement a function of the L1 layer. The controller/processor 475 implements a function of the L2 layer. The controller/processor 475 may be associated with the memory 476 that stores program code and data. The memory 476 may be referred to as a computer readable medium. During transmission from the second communication device 450 to the first communication device 410, the controller/processor 475 provides demultiplexing, packet reassembly, decryption, header decompression, and control signal processing between transmission and logical channels, to recover an upper-layer data packet from UE 450. The upper-layer data packet from the controller/processor 475 may be provided for the core network.

As an embodiment, the first node in this application includes the second communication device 450, and the second node in this application includes the first communication device 410.

As a sub-embodiment of the foregoing embodiment, the first node is user equipment, and the second node is user equipment.

As a sub-embodiment of the foregoing embodiment, the first node is user equipment, and the second node is a relay node.

As a sub-embodiment of the foregoing embodiment, the first node is a relay node, and the second node is user equipment.

As a sub-embodiment of the foregoing embodiment, the first node is user equipment, and the second node is a base station device.

As a sub-embodiment of the foregoing embodiment, the first node is a relay node, and the second node is a base station device.

As a sub-embodiment of the foregoing embodiment, the second node is user equipment, and the first node is a base station device.

As a sub-embodiment of the foregoing embodiment, the second node is a relay node, and the first node is a base station device.

As a sub-embodiment of the foregoing embodiment, the second communication device 450 includes: at least one controller/processor; and the at least one controller/processor is responsible for a HARQ operation.

As a sub-embodiment of the foregoing embodiment, the first communication device 410 includes: at least one controller/processor; and the at least one controller/processor is responsible for a HARQ operation.

As a sub-embodiment of the foregoing embodiment, the first communication device 410 includes: at least one controller/processor; and the at least one controller/processor is responsible for performing error detection by using an acknowledgement (ACK) and/or negative acknowledgement (NACK) protocol, to support the HARQ operation.

As an embodiment, the second communication device 450 includes: at least one processor and at least one memory, and the at least one memory includes computer program code; and the at least one memory and the computer program code are configured to be used with the at least one processor. The second communication device 450 at least: receiving first signalling; and sending a first PUCCH in a first slot, the first PUCCH carrying a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As a sub-embodiment of the foregoing embodiment, the second communication device 450 corresponds to the first node in this application.

As an embodiment, the second communication device 450 includes: a memory storing a program of computer readable instructions, the program of computer readable instructions generating an action when being executed by at least one processor, and the action including: receiving first signalling; and sending a first PUCCH in a first slot, the first PUCCH carrying a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As a sub-embodiment of the foregoing embodiment, the second communication device 450 corresponds to the first node in this application.

As an embodiment, the first communication device 410 includes: at least one processor and at least one memory, and the at least one memory includes computer program code; and the at least one memory and the computer program code are configured to be used with the at least one processor. The first communication device 410 at least: sending first signalling; and receiving a first PUCCH in a first slot, the first PUCCH carrying a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As a sub-embodiment of the foregoing embodiment, the first communication device 410 corresponds to the second node in this application.

As an embodiment, the first communication device 410 includes: a memory storing a program of computer readable instructions, the program of computer readable instructions generating an action when being executed by at least one processor, and the action including: sending first signalling; and receiving a first PUCCH in a first slot, the first PUCCH carrying a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As a sub-embodiment of the foregoing embodiment, the first communication device 410 corresponds to the second node in this application.

As an embodiment, at least one of {the antenna 452, the receiver 454, the multi-antenna receiving processor 458, the receiving processor 456, the controller/processor 459, the memory 460, and the data source 467} is configured to receive the first signalling in this application.

As an embodiment, at least one of {the antenna 420, the transmitter 418, the multi-antenna transmit processor 471, the transmit processor 416, the controller/processor 475, and the memory 476} is configured to send the first signalling in this application.

As an embodiment, at least one of {the antenna 452, the receiver 454, the multi-antenna receiving processor 458, the receiving processor 456, the controller/processor 459, the memory 460, and the data source 467} is configured to receive a PDSCH in this application.

As an embodiment, at least one of {the antenna 420, the transmitter 418, the multi-antenna transmit processor 471, the transmit processor 416, the controller/processor 475, and the memory 476} is configured to send a PDSCH in this application.

As an embodiment, at least one of {the antenna 452, the transmitter 454, the multi-antenna transmit processor 458, the transmit processor 468, the controller/processor 459, the memory 460, and the data source 467} is configured to send the first PUCCH in this application.

As an embodiment, at least one of {the antenna 420, the receiver 418, the multi-antenna receiving processor 472, the receiving processor 470, the controller/processor 475, and the memory 476} is configured to receive the first PUCCH in this application.

### Embodiment 5

Embodiment 5 illustrates a flowchart of signal transmission according to an embodiment of this application, as shown in FIG. 5. In FIG. 5, a first node U1 and a second node U2 communicate with each other through an air interface. Particularly, in FIG. 5, steps in a dotted box F1 are optional.

The first node U1 receives first signalling in step S511; receives at least one PDSCH in step S512; and sends a first PUCCH in a first slot in step S513.

The second node U2 sends first signalling in step S521; sends at least one PDSCH in step S522; and receives a first PUCCH in a first slot in step S523.

In Embodiment 5, the first PUCCH carries a target HARQ-ACK bit block; the first signalling is used for determining the first slot; a first change occasion includes a time occupied by one first-type configuration change, the first-type configuration change includes a change of a frequency band resource, and the first-type configuration change occurs in a same active BWP; the target HARQ-ACK bit block depends on a target feature occasion set, the target feature occasion set includes at least one feature occasion, the target feature occasion set depends on the chronological order among the first slot, the target slot, and the first change occasion, and the target slot is a downlink slot; a plurality of frequency band resources are configured for the same active BWP, and the first-type configuration change includes switching between the plurality of frequency band resources within the same active BWP; an information element BWP-Downlink used for configuring the same active BWP includes a first parameter set, and within the same active BWP, parameters in the first parameter set are used before and after the first-type configuration change occurs; or an information element BWP-Uplink used for configuring the same active BWP includes a first parameter set, and within the same active BWP, parameters in the first parameter set are used before and after the first-type configuration change occurs.

As a sub-embodiment of Embodiment 5, the target slot timing value is one in a slot timing value set; in a process of determining the target feature occasion set: for the target slot timing value, the operation of adding a feature occasion for the target index is skipped if any condition in a first condition set is satisfied; otherwise, the operation of adding a feature occasion for the target index is performed at least once; and the first condition set includes: the first slot is not before the first change occasion, and the target slot is before the first change occasion; and the target slot is associated with the target index and the target slot timing value.

As a sub-embodiment of Embodiment 5, the first signalling schedules the at least one PDSCH, and the target HARQ-ACK bit block includes at least one HARQ-ACK bit of a transport block in the at least one PDSCH scheduled for the first signalling.

As an embodiment, the first node U1 is the first node in this application.

As an embodiment, the second node U2 is the second node in this application.

As an embodiment, the first node U1 is UE.

As an embodiment, the first node U1 is a base station.

As an embodiment, the second node U2 is a base station.

As an embodiment, the second node U2 is UE.

As an embodiment, an air interface between the second node U2 and the first node U1 is a Uu interface.

As an embodiment, an air interface between the second node U2 and the first node U1 includes a cellular link.

As an embodiment, an air interface between the second node U2 and the first node U1 is a PC5 interface.

As an embodiment, an air interface between the second node U2 and the first node U1 includes a sidelink.

As an embodiment, an air interface between the second node U2 and the first node U1 includes a wireless interface between a base station device and user equipment.

As an embodiment, an air interface between the second node U2 and the first node U1 includes a wireless interface between a satellite device and user equipment.

As an embodiment, an air interface between the second node U2 and the first node U1 includes a wireless interface between user equipment and user equipment.

As an embodiment, problems to be resolved in this application include: how to reduce HARQ-ACK feedback overheads.

As an embodiment, problems to be resolved in this application include: how to optimize a system design.

As an embodiment, problems to be resolved in this application include: how to reduce operation costs.

As an embodiment, problems to be resolved in this application include: how to reduce overheads of control signalling.

As an embodiment, problems to be resolved in this application include: how to reduce energy consumption of the base station and the terminal.

As an embodiment, problems to be resolved in this application include: how to determine the target HARQ-ACK bit block based on at least the first change occasion.

As an embodiment, problems to be resolved in this application include: how to generate the HARQ-ACK codebook when a change of a frequency band resource is considered.

As an embodiment, a step in a dotted box F1 exists.

As an embodiment, a step in a dotted box F1 does not exist.

### Embodiment 6

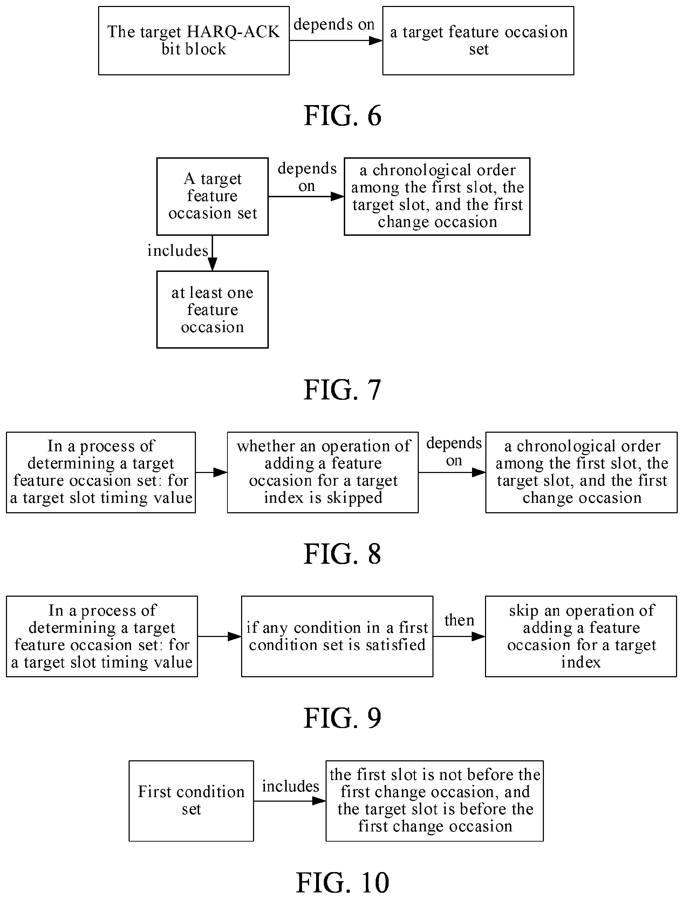

Embodiment 6 illustrates a schematic diagram of a relationship between a target HARQ-ACK bit block and a target feature occasion set according to an embodiment of this application, as shown in FIG. 6.

In Embodiment 6, the target HARQ-ACK bit block depends on the target feature occasion set.

As an embodiment, the target feature occasion set is determined for a serving cell.

As an embodiment, each feature occasion in the target feature occasion set is for a serving cell.

As an embodiment, the expression that the target HARQ-ACK bit block depends on the target feature occasion set includes: determining of the target HARQ-ACK bit block depends on the target feature occasion set.

As an embodiment, the expression that the target HARQ-ACK bit block depends on the target feature occasion set includes: a quantity of HARQ-ACK bits included in the target HARQ-ACK bit block depends on the target feature occasion set.

As an embodiment, the expression that the target HARQ-ACK bit block depends on the target feature occasion set includes: determining of the target HARQ-ACK bit block depends on a cardinality of the target feature occasion set.

As an embodiment, for a serving cell corresponding to the target feature occasion set, the target HARQ-ACK bit block includes at least one HARQ-ACK bit generated for each non-negative integer that is less than a cardinality of the target feature occasion set.

As an embodiment, the target HARQ-ACK bit block includes at least one HARQ-ACK bit generated for each feature occasion in the target feature occasion set.

As an embodiment, the cardinality of the target feature occasion set is used for determining a quantity of HARQ-ACK bits included in the target HARQ-ACK bit block.

As an embodiment, the cardinality of the target feature occasion set indicates a quantity of HARQ-ACK bits included in the target HARQ-ACK bit block.

As an embodiment, the cardinality of the target feature occasion set is used for determining a value of at least one HARQ-ACK bit in the target HARQ-ACK bit block.

As an embodiment, the cardinality of the target feature occasion set indicates a value of at least one HARQ-ACK bit in the target HARQ-ACK bit block.

As an embodiment, determining of at least one HARQ-ACK bit in the target HARQ-ACK bit block depends on at least one feature occasion in the target feature occasion set.

As an embodiment, if a PDSCH associated with a feature occasion in the target feature occasion set is scheduled by a DCI format indicating a TDRA row that includes more than one SLIV entry (indicating a TDRA row that includes more than one SLIV entry): {if the PDSCH is associated with a last SLIV in the TDRA row, at least one HARQ-ACK bit is generated based on a decoding result of at least one transport block in PDSCH reception, and the at least one generated HARQ-ACK bit is included in the target HARQ-ACK bit block. Otherwise, at least one NACK is generated, and a HARQ-ACK bit corresponding to the at least one generated NACK is included in the target HARQ-ACK bit block} .

As an embodiment, if there is a PDSCH that is scheduled by the DCI format and that is associated with a feature occasion in the target feature occasion set, at least one HARQ-ACK bit is generated based on a decoding result of at least one transport block in PDSCH reception, and the at least one generated HARQ-ACK bit is included in the target HARQ-ACK bit block; and otherwise, at least one NACK is generated, and a HARQ-ACK bit corresponding to the at least one generated NACK is included in the target HARQ-ACK bit block}.

### Embodiment 7

Embodiment 7 illustrates a schematic diagram of a relationship between a target feature occasion set and a chronological order among a first slot, a target slot, and a first change occasion according to an embodiment of this application, as shown in FIG. 7.

In Embodiment 7, the target feature occasion set includes at least one feature occasion, and the target feature occasion set depends on the chronological order among the first slot, the target slot, and the first change occasion.

As an embodiment, a feature occasion is a non-negative integer.

As an embodiment, a feature occasion is indicated by a non-negative integer index.

As an embodiment, a feature occasion is an occasion (occasion) for downlink transmission.

As an embodiment, a feature occasion is an occasion (occasion) for candidate PDSCH reception.

As an embodiment, a feature occasion is an occasion (occasion) for a first-type element set. The first-type element set includes at least one of candidate PDSCH receptions or SPS PDSCH releases or TCI state update (candidate PDSCH receptions or SPS PDSCH releases or TCI state update).

As an embodiment, a feature occasion is an occasion (occasion) for candidate PDSCH receptions or SPS PDSCH releases or TCI state update.

As an embodiment, a feature occasion is an occasion (occasion) used for determining a HARQ-ACK bit in a type-1 HARQ-ACK codebook (Type-1 HARQ-ACK codebook).

As an embodiment, a feature occasion is an occasion (occasion) reserved for generation of at least one HARQ-ACK bit.

As an embodiment, a feature occasion in the target feature occasion set is a non-negative integer.

As an embodiment, a feature occasion in the target feature occasion set is indicated by a non-negative integer index.

As an embodiment, a feature occasion in the target feature occasion set is an occasion (occasion) for downlink transmission.

As an embodiment, a feature occasion in the target feature occasion set is an occasion (occasion) for candidate PDSCH reception.

As an embodiment, a feature occasion in the target feature occasion set is an occasion (occasion) for a first-type element set. The first-type element set includes at least one of candidate PDSCH receptions or SPS PDSCH releases or TCI state update.

As an embodiment, a feature occasion in the target feature occasion set is an occasion (occasion) for candidate PDSCH receptions or SPS PDSCH releases or TCI state update.

As an embodiment, a feature occasion in the target feature occasion set is an occasion (occasion) used for determining a HARQ-ACK bit in a type-1 HARQ-ACK codebook (Type-1 HARQ-ACK codebook).

As an embodiment, a feature occasion in the target feature occasion set is an occasion (occasion) reserved for generation of at least one HARQ-ACK bit.

As an embodiment, the target HARQ-ACK bit block includes a HARQ-ACK codebook (codebook).

As an embodiment, the target HARQ-ACK bit block is a HARQ-ACK codebook (codebook).

As an embodiment, the target HARQ-ACK bit block includes a type-1 HARQ-ACK codebook (Type-1 HARQ-ACK codebook).

As an embodiment, the target HARQ-ACK bit block is a type-1 HARQ-ACK codebook (Type-1 HARQ-ACK codebook).

As an embodiment, the target HARQ-ACK bit block includes at least one HARQ-ACK bit.

As an embodiment, determining of the target feature occasion set depends on the chronological order among the first slot, the target slot, and the first change occasion.

As an embodiment, the expression "the target feature occasion set depends on the chronological order among the first slot, the target slot, and the first change occasion" includes:
a target slot timing value is one in a slot timing value set; for the target slot timing value, whether to skip an operation of adding a feature occasion to the target feature occasion set for the target index depends on the chronological order among the first slot, the target slot, and the first change occasion; and the target slot is associated with the target index and the target slot timing value.

As an embodiment, the chronological order among the first slot, the target slot, and the first change occasion indicates a quantity of feature occasions included in the target feature occasion set.

As an embodiment, the chronological order among the first slot, the target slot, and the first change occasion indicates an order of feature occasions in the target feature occasion set.

### Embodiment 8

Embodiment 8 illustrates a schematic diagram in which a target feature occasion set depends on a chronological order among a first slot, a target slot, and a first change occasion according to an embodiment of this application, as shown in FIG. 8.

In Embodiment 8, a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

As an embodiment, the target slot timing value is one in a first slot timing value set.

As an embodiment, the target slot timing value is any one in the first slot timing value set.

As an embodiment, the first slot timing value set includes at least one slot timing value (slot timing value).

As an embodiment, a slot timing value in the first slot timing value set is a non-negative integer.

As an embodiment, a slot timing value in the first slot timing value set is a positive integer.

As an embodiment, the first slot timing value set is configurable.

As an embodiment, a parameter whose name includes dl-DataToUL-ACK is used for configuring the first slot timing value set.

As an embodiment, the first slot timing value set includes {1, 2, 3, 4, 5, 6, 7, 8}.

As an embodiment, the first slot timing value set includes {7, 8, 12, 16, 20, 24, 28, 32}.

As an embodiment, the first slot timing value set includes {13, 16, 24, 32, 40, 48, 56, 64}.

As an embodiment, the first slot timing value set depends on an SCS (Subcarrier spacing, subcarrier spacing) configuration.

As an embodiment, the target feature occasion set depends on the first slot timing value set.

As an embodiment, determining of the target feature occasion set depends on at least one slot timing value in the first slot timing value set.

As an embodiment, determining of the target feature occasion set depends on a cardinality (cardinality) in the first slot timing value set.

As an embodiment, the first slot timing value set is a slot timing value set for a serving cell.

As an embodiment, the first slot timing value set is configured for a serving cell.

As an embodiment, the meaning for the target slot timing value includes: an index that is for the target slot timing value in the first slot timing value set.

As an embodiment, the target slot timing value is a non-negative integer.

As an embodiment, the target slot timing value is a positive integer.

As an embodiment, the target index is equal to 0.

As an embodiment, the target index is an index of a downlink slot overlapping an uplink slot.

As an embodiment, for the target slot timing value: if the operation of adding a feature occasion for the target index is not skipped, the target feature occasion set includes at least one feature occasion for the target index.

As an embodiment, for the target slot timing value: if the operation of adding a feature occasion for the target index is skipped, the target feature occasion set does not include a feature occasion for the target index.

As an embodiment, skipping the operation of adding a feature occasion for the target index includes the following meaning: not performing the operation of adding a feature occasion for the target index.

As an embodiment, not skipping the operation of adding a feature occasion for the target index includes the following meaning: performing, at least once, the operation of adding a feature occasion for the target index.

As an embodiment, skipping the operation of adding a feature occasion for the target index includes the following meaning: when a loop for a variable n is executed: not performing the operation of adding a feature occasion after the variable n is assigned to be equal to the target index and before performing n = n + 1 on the variable n.

As an embodiment, not skipping the operation of adding a feature occasion for the target index includes the following meaning: when a loop for a variable n is executed: performing, at least once, the operation of adding a feature occasion after the variable n is assigned to be equal to the target index and before performing n = n + 1 on the variable n.

As an embodiment, in this application, the expression "an operation of adding a feature occasion to the target feature occasion set for the target index" is equivalent to or interchangeable with the expression "an operation of adding a feature occasion for the target index".

As an embodiment, skipping an operation of adding a feature occasion to the target feature occasion set for the target index includes the following meaning: not performing the operation of adding a feature occasion to the target feature occasion set for the target index.

As an embodiment, not skipping an operation of adding a feature occasion to the target feature occasion set for the target index includes the following meaning: performing, at least once, an operation of adding a feature occasion to the target feature occasion set for the target index.

As an embodiment, skipping an operation of adding a feature occasion to the target feature occasion set for the target index includes the following meaning: when a loop for a variable n is executed: not performing the operation of adding a feature occasion to the target feature occasion set after the variable n is assigned to be equal to the target index and before performing n = n + 1 on the variable n.

As an embodiment, not skipping an operation of adding a feature occasion to the target feature occasion set for the target index includes the following meaning: when a loop for a variable n is executed: performing, at least once, the operation of adding a feature occasion to the target feature occasion set after the variable n is assigned to be equal to the target index and before performing n = n + 1 on the variable n.

As an embodiment, in a process of determining the target feature occasion set: for the target slot timing value: the chronological order among the first slot, the target slot, and the first change occasion indicates whether the operation of adding a feature occasion for the target index is skipped.

As an embodiment, in a process of determining the target feature occasion set: for the target slot timing value: an order of the first slot, the target slot, and the first change occasion in time domain indicates whether the operation of adding a feature occasion for the target index is skipped.

As an embodiment, in a process of determining the target feature occasion set: for the target slot timing value: an order of the first slot, the target slot, and the first change occasion in time domain implicitly indicates whether the operation of adding a feature occasion for the target index is skipped.

As an embodiment, the expression "in a process of determining the target feature occasion set: for the target slot timing value, whether to skip an operation of adding a feature occasion for a target index depends on the chronological order among the first slot, the target slot, and the first change occasion" includes:
in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

As an embodiment, the target slot is associated with the first slot.

As an embodiment, determining of the target slot depends on at least the first slot.

As an embodiment, determining of the target slot depends on the first signalling.

As an embodiment, the target slot is not later than the first slot.

As an embodiment, an end time of the target slot is not later than an end time of the first slot.

As an embodiment, a start time of the target slot is not later than a start time of the first slot.

As an embodiment, both the target index and the target slot timing value indicate the target slot.

As an embodiment, determining of the target slot depends on at least the target index and the target slot timing value.

As an embodiment, the expression that the target slot is a downlink slot includes: the target slot is a slot *n*_{0,*k*} + *n_{D}, n_{D}* is the target index, and *n*_{0,*k*} is an index corresponding to a DL slot with a smallest index among DL slots overlapping with a UL slot *n_{U}* - *K*_{1,*k*}; and *n_{U}* is an index of the first slot, and *K*_{1,*k*} is the target slot timing value.

As an embodiment, the target slot is a slot *n*_{0,*k*} + *n_{D}*, *n_{D}* is the target index, and *n*_{0,*k*} is an index corresponding to a DL slot with a smallest index among DL slots overlapping with a UL slot *n_{U} - K*_{1*,k*}; and *n_{U}* is an index of the first slot, and *K*_{1*,k*} is the target slot timing value.

As an embodiment, the operation of adding a feature occasion for the target index includes: an operation of adding at least one feature occasion for the target index to a feature occasion set.

As an embodiment, the operation of adding a feature occasion for the target index includes: an operation of adding at least one feature occasion for the target index to the target feature occasion set.

As an embodiment, the operation of adding a feature occasion for the target index includes: an operation of adding at least one feature occasion for the target index to a feature occasion set that is used for obtaining the target feature occasion set; and the feature occasion set used for obtaining the target feature occasion set is a subset of the target feature occasion set.

### Embodiment 9

Embodiment 9 illustrates a schematic diagram of a relationship between a target feature occasion set and a first condition set according to an embodiment of this application, as shown in FIG. 9.

In Embodiment 9, in a process of determining the target feature occasion set: for the target slot timing value, the operation of adding a feature occasion for the target index is skipped if any condition in a first condition set is satisfied.

As an embodiment, in a process of determining the target feature occasion set: for the target slot timing value: the operation of adding a feature occasion for the target index is skipped if any condition in a first condition set is satisfied; otherwise, the operation of adding at least one feature occasion for the target index is performed at least once; and
as an embodiment, a condition in the first condition set is related to the chronological order among the first slot, the target slot, and the first change occasion.

As an embodiment, a condition in the first condition set is based on the chronological order among the first slot, the target slot, and the first change occasion.

As an embodiment, the first condition set includes: the first slot is not before the first change occasion, and the target slot is before the first change occasion.

As an embodiment, for the target slot timing value, the operation of adding a feature occasion to the target feature occasion set for the target index is skipped if any condition in a first condition set is satisfied; otherwise, at least one feature occasion is added to the target feature occasion set for the target index; and the first condition set includes: the first slot is not before the first change occasion, and the target slot is before the first change occasion.

### Embodiment 10

Embodiment 10 illustrates a schematic diagram of a first condition set according to an embodiment of this application, as shown in FIG. 10.

In Embodiment 10, the first condition set includes: the first slot is not before the first change occasion, and the target slot is before the first change occasion.

As an embodiment, the expression that the first slot is not before the first change occasion includes: the first slot and the first change occasion start at the same time, or the first slot starts after the first change occasion.

As an embodiment, the expression that the first slot is not before the first change occasion includes: a start time of the first slot is not earlier than a start time of the first change occasion.

As an embodiment, the expression that the first slot is not before the first change occasion includes: an end time of the first slot is not earlier than a start time of the first change occasion.

As an embodiment, the expression that the first slot is not before the first change occasion includes: an end time of the first slot is not earlier than an end time of the first change occasion.

As an embodiment, a start time of the target slot is before a start time of the first change occasion.

As an embodiment, an end time of the target slot is before an end time of the first change occasion.

As an embodiment, a start time of the target slot is before an end time of the first change occasion.

As an embodiment, the first condition set includes only one condition.

As an embodiment, the first condition set only includes: the first slot is not before the first change occasion, and the target slot is before the first change occasion.

As an embodiment, the first condition set includes a plurality of conditions.

As an embodiment, the first condition set further includes a condition related to an active BWP change.

As an embodiment, the first condition set further includes: the first slot is not before a slot occupied by an active downlink BWP change (an active DL BWP change), and the target slot is before the slot occupied by the active downlink BWP change.

As an embodiment, the first condition set further includes: the first slot is not before a slot occupied by an active uplink BWP change (an active UL BWP change), and the target slot is before the slot occupied by the active uplink BWP change.

As an embodiment, the first condition set further includes a condition, whether the condition is satisfied depends on an uplink/downlink TDD configuration (Uplink/Downlink TDD configuration).

As an embodiment, the first condition set further includes: A set of rows (set of rows) obtained after determining whether a symbol occupied by a PDSCH time domain resource obtained for at least a row (row (s)) is configured as a UL is an empty set.

As an embodiment, the row (row) indicates TDRA (time domain resource allocation, time domain resource allocation).

As an embodiment, the row belongs to a TDRA table.

As an embodiment, the row defines at least one of a slot offset (slot offset), a start and length indicator (start and length indicator, SLIV), a start symbol and the allocation length (start symbol and the allocation length), and a PDSCH mapping type (PDSCH mapping type).

### Embodiment 11

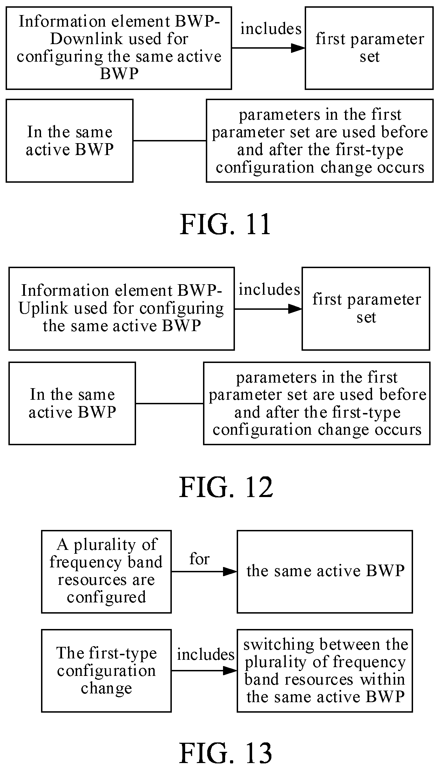

Embodiment 11 illustrates a schematic diagram of a relationship among a first-type configuration change, a same active BWP, and a first parameter set according to an embodiment of this application, as shown in FIG. 11.

In Embodiment 11, an information element BWP-Downlink used for configuring the same active BWP includes a first parameter set, and within the same active BWP, parameters in the first parameter set are used before and after the first-type configuration change occurs.

As an embodiment, the same active BWP is an active downlink BWP (active DL BWP).

As an embodiment, the first parameter set includes an identifier (identifier, ID) of the BWP.

As an embodiment, the first parameter set includes a configuration parameter of a subcarrier spacing (Subcarrier spacing).

As an embodiment, the first parameter set includes whether a configuration parameter of an extended cyclic prefix (extended cyclic prefix) is used.

As an embodiment, the first parameter set includes pdcch-ConfigCommon.

As an embodiment, the first parameter set includes pdsch-ConfigCommon.

As an embodiment, the first parameter set includes at least one RRC layer parameter.

As an embodiment, an information element BWP-DownlinkDedicated used for configuring the same active BWP includes a first parameter set, and within the same active BWP, parameters in the first parameter set are used before and after the first-type configuration change occurs.

As an embodiment, an information element BWP-DownlinkCommon used for configuring the same active BWP includes a first parameter set, and within the same active BWP, parameters in the first parameter set are used before and after the first-type configuration change occurs.

As an embodiment, the first parameter set includes a parameter used for configuring a PDSCH.

As an embodiment, the first parameter set includes a parameter used for configuring a PDCCH.

As an embodiment, the first parameter set includes a parameter used for configuring DL SPS.

As an embodiment, the expression that parameters in the first parameter set are used before and after the first-type configuration change occurs includes: parameters in the first parameter set keeping valid regardless of whether the first-type configuration change occurs.

As an embodiment, the expression that parameters in the first parameter set are used before and after the first-type configuration change occurs includes: occurrence of the first-type configuration change does not affect validity of parameters in the first parameter set.

### Embodiment 12

Embodiment 12 illustrates a schematic diagram of a relationship among a first-type configuration change, a same active BWP, and a first parameter set according to an embodiment of this application, as shown in FIG. 12.

In Embodiment 12, an information element BWP-Uplink used for configuring the same active BWP includes a first parameter set, and within the same active BWP, parameters in the first parameter set are used before and after the first-type configuration change occurs.

As an embodiment, the same active BWP is an active uplink BWP (active UL BWP).

As an embodiment, the first parameter set includes an identifier (identifier, ID) of the BWP.

As an embodiment, the first parameter set includes a configuration parameter of a subcarrier spacing (Subcarrier spacing).

As an embodiment, the first parameter set includes whether a configuration parameter of an extended cyclic prefix (extended cyclic prefix) is used.

As an embodiment, the first parameter set includes rach-ConfigCommon.

As an embodiment, the first parameter set includes pusch-ConfigCommon.

As an embodiment, the first parameter set includes pucch-ConfigCommon.

As an embodiment, the first parameter set includes at least one RRC layer parameter.

As an embodiment, an information element BWP-UplinkDedicated used for configuring the same active BWP includes a first parameter set, and within the same active BWP, parameters in the first parameter set are used before and after the first-type configuration change occurs.

As an embodiment, an information element BWP-UplinkCommon used for configuring the same active BWP includes a first parameter set, and within the same active BWP, parameters in the first parameter set are used before and after the first-type configuration change occurs.

As an embodiment, the first parameter set includes a parameter used for configuring a PUSCH.

As an embodiment, the first parameter set includes a parameter used for configuring a PUCCH.

As an embodiment, the first parameter set includes a parameter used for configuring random access.

As an embodiment, the first parameter set includes a parameter used for configuring configured grant.

As an embodiment, the expression that parameters in the first parameter set are used before and after the first-type configuration change occurs includes: parameters in the first parameter set keeping valid regardless of whether the first-type configuration change occurs.

As an embodiment, the expression that parameters in the first parameter set are used before and after the first-type configuration change occurs includes: occurrence of the first-type configuration change does not affect validity of parameters in the first parameter set.

### Embodiment 13

Embodiment 13 illustrates a schematic diagram of a relationship among a first-type configuration change, a same active BWP, and a plurality of frequency band resources according to an embodiment of this application, as shown in FIG. 13.

In Embodiment 13, a plurality of frequency band resources are configured for the same active BWP, and the first-type configuration change includes switching between the plurality of frequency band resources within the same active BWP.

As an embodiment, the switching between the plurality of frequency band resources includes: switching between two of the plurality of frequency band resources.

As an embodiment, the switching between the plurality of frequency band resources includes: switching between any two of the plurality of frequency band resources.

As an embodiment, the expression that the first-type configuration change includes a change of a frequency band resource includes: the first-type configuration change includes switching between the plurality of frequency band resources within the same active BWP.

As an embodiment, one of the plurality of frequency band resources is indicated by a frequency domain location (Frequency domain location) and a bandwidth (bandwidth).

As an embodiment, any one of the plurality of frequency band resources is indicated by a frequency domain location (Frequency domain location) and a bandwidth (bandwidth).

As an embodiment, one of the plurality of frequency band resources includes at least one resource block.

As an embodiment, one of the plurality of frequency band resources includes at least one physical resource block.

As an embodiment, any one of the plurality of frequency band resources includes at least one resource block.

As an embodiment, any one of the plurality of frequency band resources includes at least one physical resource block.

As an embodiment, the plurality of frequency band resources are different from each other.

As an embodiment, the plurality of frequency band resources all belong to the same active BWP.

As an embodiment, one of the plurality of frequency band resources is the same active BWP.

As an embodiment, the plurality of frequency band resources are all configured in an information element BWP-Downlink used for configuring the same active BWP.

As an embodiment, the plurality of frequency band resources are all configured in an information element BWP-DownlinkDedicated used for configuring the same active BWP.

As an embodiment, the plurality of frequency band resources are all configured in an information element BWP-DownlinkCommon used for configuring the same active BWP.

As an embodiment, the plurality of frequency band resources are configured in an information element BWP-Uplink used for configuring the same active BWP.

As an embodiment, the plurality of frequency band resources are all configured in an information element BWP-UplinkDedicated used for configuring the same active BWP.

As an embodiment, the plurality of frequency band resources are all configured in an information element BWP-UplinkCommon used for configuring the same active BWP.

### Embodiment 14

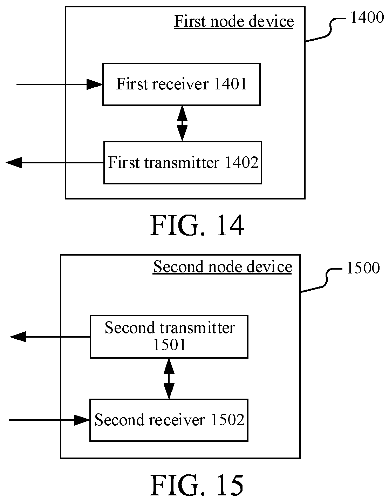

Embodiment 14 illustrates a structural block diagram of a processing apparatus in a first node device, as shown in FIG. 14. In FIG. 14, the first node device processing apparatus 1400 includes a first receiver 1401 and a first transmitter 1402.

As an embodiment, the first node device 1400 is a base station.

As an embodiment, the first node device 1400 is user equipment.

As an embodiment, the first node device 1400 is a relay node.

As an embodiment, the first node device 1400 is an in-vehicle communication device.

As an embodiment, the first node device 1400 is user equipment supporting V2X communication.

As an embodiment, the first node device 1400 is a relay node supporting V2X communication.

As an embodiment, the first node device 1400 is user equipment supporting an operation on a high-frequency spectrum.

As an embodiment, the first node device 1400 is user equipment supporting an operation on a shared spectrum.

As an embodiment, the first node device 1400 is user equipment supporting an XR service.

As an embodiment, the first node device 1400 is user equipment supporting multicast transmission.

As an embodiment, the first receiver 1401 includes at least one of an antenna 452, a receiver 454, a multi-antenna receiving processor 458, a receiving processor 456, a controller/processor 459, a memory 460, and a data source 467 in FIG. 4 of this application.

As an embodiment, the first receiver 1401 includes at least the first five of an antenna 452, a receiver 454, a multi-antenna receiving processor 458, a receiving processor 456, a controller/processor 459, a memory 460, and a data source 467 in FIG. 4 of this application.

As an embodiment, the first receiver 1401 includes at least the first four of an antenna 452, a receiver 454, a multi-antenna receiving processor 458, a receiving processor 456, a controller/processor 459, a memory 460, and a data source 467 in FIG. 4 of this application.

As an embodiment, the first receiver 1401 includes at least the first three of an antenna 452, a receiver 454, a multi-antenna receiving processor 458, a receiving processor 456, a controller/processor 459, a memory 460, and a data source 467 in FIG. 4 of this application.

As an embodiment, the first receiver 1401 includes at least the first two of an antenna 452, a receiver 454, a multi-antenna receiving processor 458, a receiving processor 456, a controller/processor 459, a memory 460, and a data source 467 in FIG. 4 of this application.

As an embodiment, the first transmitter 1402 includes at least one of an antenna 452, a transmitter 454, a multi-antenna transmit processor 457, a transmit processor 468, a controller/processor 459, a memory 460, and a data source 467 in FIG. 4 of this application.

As an embodiment, the first transmitter 1402 includes at least the first five of an antenna 452, a transmitter 454, a multi-antenna transmit processor 457, a transmit processor 468, a controller/processor 459, a memory 460, and a data source 467 in FIG. 4 of this application.

As an embodiment, the first transmitter 1402 includes at least the first four of an antenna 452, a transmitter 454, a multi-antenna transmit processor 457, a transmit processor 468, a controller/processor 459, a memory 460, and a data source 467 in FIG. 4 of this application.

As an embodiment, the first transmitter 1402 includes at least the first three of an antenna 452, a transmitter 454, a multi-antenna transmit processor 457, a transmit processor 468, a controller/processor 459, a memory 460, and a data source 467 in FIG. 4 of this application.

As an embodiment, the first transmitter 1402 includes at least the first two of an antenna 452, a transmitter 454, a multi-antenna transmit processor 457, a transmit processor 468, a controller/processor 459, a memory 460, and a data source 467 in FIG. 4 of this application.

As an embodiment, the first receiver 1401 receives first signalling; the first transmitter 1402 sends a first PUCCH in a first slot, and the first PUCCH carries a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As an embodiment, the target HARQ-ACK bit block depends on a target feature occasion set, the target feature occasion set includes at least one feature occasion, and the target feature occasion set depends on the chronological order among the first slot, the target slot, and the first change occasion.

As an embodiment, a cardinality of the target feature occasion set is used for determining the target HARQ-ACK bit block.

As an embodiment, the target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

As an embodiment, in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

As an embodiment, an information element BWP-Downlink used for configuring the same active BWP includes a first parameter set, and within the same active BWP, parameters in the first parameter set are used before and after the first-type configuration change occurs.

As an embodiment, an information element BWP-Uplink used for configuring the same active BWP includes a first parameter set, and within the same active BWP, parameters in the first parameter set are used before and after the first-type configuration change occurs.

As an embodiment, a plurality of frequency band resources are configured for the same active BWP, and the first-type configuration change includes switching between the plurality of frequency band resources within the same active BWP.

As an embodiment, the first receiver 1401 receives at least one PDSCH, the first signalling schedules the at least one PDSCH, and the target HARQ-ACK bit block includes at least one HARQ-ACK bit for a transport block in the at least one PDSCH.

As an embodiment, the first receiver 1401 receives first signalling; the first transmitter 1402 sends a first PUCCH in a first slot, and the first PUCCH carries a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; the target HARQ-ACK bit block depends on a target feature occasion set, the target feature occasion set includes at least one feature occasion, a feature occasion in the target feature occasion set is an occasion (occasion) for a first-type element set, and the first-type element set includes at least one of candidate PDSCH receptions or SPS PDSCH releases or TCI state update; a target slot timing value is one in a slot timing value set, and the slot timing value set is configurable; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value; a plurality of frequency band resources are configured for the same active BWP, and the first-type configuration change includes switching between the plurality of frequency band resources within the same active BWP;

As a sub-embodiment of the foregoing embodiment, an information element BWP-Downlink used for configuring the same active BWP includes a first parameter set, and within the same active BWP, parameters in the first parameter set are used before and after the first-type configuration change occurs; in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

As a sub-embodiment of the foregoing embodiment, an information element BWP-Uplink used for configuring the same active BWP includes a first parameter set, and within the same active BWP, parameters in the first parameter set are used before and after the first-type configuration change occurs; in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

### Embodiment 15

Embodiment 15 illustrates a structural block diagram of a processing apparatus in a second node device, as shown in FIG. 15. In FIG. 15, the second node device processing apparatus 1500 includes a second transmitter 1501 and a second receiver 1502.

As an embodiment, the second node device 1500 is user equipment.

As an embodiment, the second node device 1500 is a base station.

As an embodiment, the second node device 1500 is a satellite device.

As an embodiment, the second node device 1500 is a relay node.

As an embodiment, the second node device 1500 is an in-vehicle communication device.

As an embodiment, the second node device 1500 is user equipment supporting V2X communication.

As an embodiment, the second node device 1500 is a device supporting an operation on a high-frequency spectrum.

As an embodiment, the second node device 1500 is a device supporting an operation on a shared spectrum.

As an embodiment, the second node device 1500 is a device supporting an XR service.

As an embodiment, the second node device 1500 is one of a test apparatus, a test device, and a test instrument.

As an embodiment, the second transmitter 1501 includes at least one of an antenna 420, a transmitter 418, a multi-antenna transmit processor 471, a transmit processor 416, a controller/processor 475, and a memory 476 in FIG. 4 of this application.

As an embodiment, the second transmitter 1501 includes at least the first five of an antenna 420, a transmitter 418, a multi-antenna transmit processor 471, a transmit processor 416, a controller/processor 475, and a memory 476 in FIG. 4 of this application.

As an embodiment, the second transmitter 1501 includes at least the first four of an antenna 420, a transmitter 418, a multi-antenna transmit processor 471, a transmit processor 416, a controller/processor 475, and a memory 476 in FIG. 4 of this application.

As an embodiment, the second transmitter 1501 includes at least the first three of an antenna 420, a transmitter 418, a multi-antenna transmit processor 471, a transmit processor 416, a controller/processor 475, and a memory 476 in FIG. 4 of this application.

As an embodiment, the second transmitter 1501 includes at least the first two of an antenna 420, a transmitter 418, a multi-antenna transmit processor 471, a transmit processor 416, a controller/processor 475, and a memory 476 in FIG. 4 of this application.

As an embodiment, the second receiver 1502 includes at least one of an antenna 420, a receiver 418, a multi-antenna receiving processor 472, a receiving processor 470, a controller/processor 475, and a memory 476 in FIG. 4 of this application.

As an embodiment, the second receiver 1502 includes at least the first five of an antenna 420, a receiver 418, a multi-antenna receiving processor 472, a receiving processor 470, a controller/processor 475, and a memory 476 in FIG. 4 of this application.

As an embodiment, the second receiver 1502 includes at least the first four of an antenna 420, a receiver 418, a multi-antenna receiving processor 472, a receiving processor 470, a controller/processor 475, and a memory 476 in FIG. 4 of this application.

As an embodiment, the second receiver 1502 includes at least the first three of an antenna 420, a receiver 418, a multi-antenna receiving processor 472, a receiving processor 470, a controller/processor 475, and a memory 476 in FIG. 4 of this application.

As an embodiment, the second receiver 1502 includes at least the first two of an antenna 420, a receiver 418, a multi-antenna receiving processor 472, a receiving processor 470, a controller/processor 475, and a memory 476 in FIG. 4 of this application.

As an embodiment, the second transmitter 1501 sends first signalling; the second receiver 1502 receives a first PUCCH in a first slot, and the first PUCCH carries a target HARQ-ACK bit block, where the first signalling is used for determining the first slot; a first change occasion includes a time occupied by one first-type configuration change, the first-type configuration change includes a change of a frequency band resource, and the first-type configuration change occurs in a same active BWP; and the target HARQ-ACK bit block depends on a chronological order among the first slot, a target slot, and the first change occasion, and the target slot is a downlink slot.

As an embodiment, the target HARQ-ACK bit block depends on a target feature occasion set, the target feature occasion set includes at least one feature occasion, and the target feature occasion set depends on the chronological order among the first slot, the target slot, and the first change occasion.

As an embodiment, a cardinality of the target feature occasion set is used for determining the target HARQ-ACK bit block.

As an embodiment, the target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

As an embodiment, in a process of determining the target feature occasion set: for the target slot timing value, the operation of adding a feature occasion for the target index is skipped if any condition in a first condition set is satisfied; and the first condition set includes: the first slot is not before the first change occasion, and the target slot is before the first change occasion.

As an embodiment, an information element BWP-Downlink used for configuring the same active BWP includes a first parameter set, and within the same active BWP, parameters in the first parameter set are used before and after the first-type configuration change occurs.

As an embodiment, an information element BWP-Uplink used for configuring the same active BWP includes a first parameter set, and within the same active BWP, parameters in the first parameter set are used before and after the first-type configuration change occurs.

As an embodiment, a plurality of frequency band resources are configured for the same active BWP, and the first-type configuration change includes switching between the plurality of frequency band resources within the same active BWP.

As an embodiment, the second transmitter 1501 sends at least one PDSCH, the first signalling schedules the at least one PDSCH, and the target HARQ-ACK bit block includes at least one HARQ-ACK bit for a transport block in the at least one PDSCH.

Those of ordinary skill in the art can understand that all or some of the steps in the foregoing method can be implemented by instructing relevant hardware by a program. The program may be stored in a computer-readable storage medium, such as a read-only memory, a hard disk, or an optical disc. Optionally, all or some of the steps of the foregoing embodiment may also be implemented by using one or more integrated circuits. Correspondingly, each module unit in the foregoing embodiment may be implemented in a form of hardware, or may be implemented in a form of a software functional module. This application is not limited to any specific combination of software and hardware. The first node device in this application includes, but is not limited to, a wireless communication device such as a mobile phone, a tablet computer, a notebook, a WAN card, a low-power consumption device, an eMTC device, an NB-IoT device, an in-vehicle communication device, an aircraft, an airplane, an unmanned aerial vehicle, or a remote control plane. The second node device in this application includes, but is not limited to, a wireless communication device such as a mobile phone, a tablet computer, a notebook, a WAN card, a low-power consumption device, an eMTC device, an NB-IoT device, an in-vehicle communication device, an aircraft, an airplane, an unmanned aerial vehicle, or a remote control plane. The user equipment or the UE or the terminal in this application includes, but is not limited to, a wireless communication device such as a mobile phone, a tablet computer, a notebook, a WAN card, a low-power consumption device, an eMTC device, an NB-IoT device, an in-vehicle communication device, an aircraft, an airplane, an unmanned aerial vehicle, or a remote control plane. A base station device or a base station or a network side device in this application includes, but is not limited to, a device such as a macrocellular base station, a microcellular base station, a home base station, a relay base station, an eNB, a gNB, a transmitter receiver point TRP, a GNSS, a relay satellite, a satellite base station, an air base station, a test apparatus, a test device, and a test instrument.

A person skilled in the art should understand that the present disclosure may be implemented in other specified forms without departing from the core or basic characteristics thereof. Therefore, the currently disclosed embodiments should be considered as descriptive rather than restrictive in any way. The scope of the present disclosure is determined by the appended claims rather than the foregoing description, and all modifications within the equivalent meanings and regions thereof are considered to be included therein.

## Claims

1. A first node used for wireless communication, comprising:
a first receiver, configured to receive first signalling; and
a first transmitter, configured to send a first PUCCH in a first slot, the first PUCCH carrying a target HARQ-ACK bit block, wherein
the first signalling is used for determining the first slot; a first change occasion comprises a time occupied by one first-type configuration change, the first-type configuration change comprises a change of a frequency band resource, and the first-type configuration change occurs in a same active BWP; and the target HARQ-ACK bit block depends on a chronological order among the first slot, a target slot, and the first change occasion, and the target slot is a downlink slot.

2. The first node according to claim 1, wherein the target HARQ-ACK bit block depends on a target feature occasion set, the target feature occasion set comprises at least one feature occasion, and the target feature occasion set depends on the chronological order among the first slot, the target slot, and the first change occasion.

3. The first node according to claim 2, wherein a cardinality of the target feature occasion set is used for determining the target HARQ-ACK bit block.

4. The first node according to claim 2 or 3, wherein a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

5. The first node according to claim 4, wherein in a process of determining the target feature occasion set: for the target slot timing value, the operation of adding a feature occasion for the target index is skipped if any condition in a first condition set is satisfied; and the first condition set comprises: the first slot is not before the first change occasion, and the target slot is before the first change occasion.

6. The first node according to any one of claims 1 to 5, wherein an information element BWP-Downlink used for configuring the same active BWP comprises a first parameter set, and within the same active BWP, parameters in the first parameter set are used before and after the first-type configuration change occurs; or an information element BWP-Uplink used for configuring the same active BWP comprises a first parameter set, and within the same active BWP, parameters in the first parameter set are used before and after the first-type configuration change occurs.

7. The first node according to any one of claims 1 to 6, wherein a plurality of frequency band resources are configured for the same active BWP, and the first-type configuration change comprises switching between the plurality of frequency band resources within the same active BWP.

8. A second node used for wireless communication, comprising:
a second transmitter, configured to send first signalling; and
a second receiver, configured to receive a first PUCCH in a first slot, the first PUCCH carrying a target HARQ-ACK bit block, wherein
the first signalling is used for determining the first slot; a first change occasion comprises a time occupied by one first-type configuration change, the first-type configuration change comprises a change of a frequency band resource, and the first-type configuration change occurs in a same active BWP; and the target HARQ-ACK bit block depends on a chronological order among the first slot, a target slot, and the first change occasion, and the target slot is a downlink slot.

9. The second node according to claim 8, wherein the target HARQ-ACK bit block depends on a target feature occasion set, the target feature occasion set comprises at least one feature occasion, and the target feature occasion set depends on the chronological order among the first slot, the target slot, and the first change occasion.

10. The second node according to claim 9, wherein a cardinality of the target feature occasion set is used for determining the target HARQ-ACK bit block.

11. The second node according to claim 9 or 10, wherein a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

12. The second node according to claim 11, wherein in a process of determining the target feature occasion set: for the target slot timing value, the operation of adding a feature occasion for the target index is skipped if any condition in a first condition set is satisfied; and the first condition set comprises: the first slot is not before the first change occasion, and the target slot is before the first change occasion.

13. The second node according to any one of claims 8 to 12, wherein an information element BWP-Downlink used for configuring the same active BWP comprises a first parameter set, and within the same active BWP, parameters in the first parameter set are used before and after the first-type configuration change occurs; or an information element BWP-Uplink used for configuring the same active BWP comprises a first parameter set, and within the same active BWP, parameters in the first parameter set are used before and after the first-type configuration change occurs.

14. The second node according to any one of claims 8 to 13, wherein a plurality of frequency band resources are configured for the same active BWP, and the first-type configuration change comprises switching between the plurality of frequency band resources within the same active BWP.

15. A method for a first node used for wireless communication, comprising:
receiving first signalling; and
sending a first PUCCH in a first slot, the first PUCCH carrying a target HARQ-ACK bit block, wherein
the first signalling is used for determining the first slot; a first change occasion comprises a time occupied by one first-type configuration change, the first-type configuration change comprises a change of a frequency band resource, and the first-type configuration change occurs in a same active BWP; and the target HARQ-ACK bit block depends on a chronological order among the first slot, a target slot, and the first change occasion, and the target slot is a downlink slot.

16. The method for a first node according to claim 15, wherein the target HARQ-ACK bit block depends on a target feature occasion set, the target feature occasion set comprises at least one feature occasion, and the target feature occasion set depends on the chronological order among the first slot, the target slot, and the first change occasion.

17. The method for a first node according to claim 16, wherein a cardinality of the target feature occasion set is used for determining the target HARQ-ACK bit block.

18. The method for a first node according to claim 16 or 17, wherein a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

19. The method for a first node according to claim 18, wherein in a process of determining the target feature occasion set: for the target slot timing value, the operation of adding a feature occasion for the target index is skipped if any condition in a first condition set is satisfied; and the first condition set comprises: the first slot is not before the first change occasion, and the target slot is before the first change occasion.

20. The method for a first node according to any one of claims 15 to 19, wherein an information element BWP-Downlink used for configuring the same active BWP comprises a first parameter set, and within the same active BWP, parameters in the first parameter set are used before and after the first-type configuration change occurs; or an information element BWP-Uplink used for configuring the same active BWP comprises a first parameter set, and within the same active BWP, parameters in the first parameter set are used before and after the first-type configuration change occurs.

21. The method for a first node according to any one of claims 15 to 20, wherein a plurality of frequency band resources are configured for the same active BWP, and the first-type configuration change comprises switching between the plurality of frequency band resources within the same active BWP.

22. A method for a second node used for wireless communication, comprising:
sending first signalling; and
receiving a first PUCCH in a first slot, the first PUCCH carrying a target HARQ-ACK bit block, wherein
the first signalling is used for determining the first slot; a first change occasion comprises a time occupied by one first-type configuration change, the first-type configuration change comprises a change of a frequency band resource, and the first-type configuration change occurs in a same active BWP; and the target HARQ-ACK bit block depends on a chronological order among the first slot, a target slot, and the first change occasion, and the target slot is a downlink slot.

23. The method for a second node according to claim 22, wherein the target HARQ-ACK bit block depends on a target feature occasion set, the target feature occasion set comprises at least one feature occasion, and the target feature occasion set depends on the chronological order among the first slot, the target slot, and the first change occasion.

24. The method for a second node according to claim 23, wherein a cardinality of the target feature occasion set is used for determining the target HARQ-ACK bit block.

25. The method for a second node according to claim 23 or 24, wherein a target slot timing value is one in a slot timing value set; in a process of determining the target feature occasion set: for the target slot timing value, whether to skip an operation of adding a feature occasion for a target index depends on the chronological order among the first slot, the target slot, and the first change occasion; and the target slot is associated with the target index and the target slot timing value.

26. The method for a second node according to claim 25, wherein in a process of determining the target feature occasion set: for the target slot timing value, the operation of adding a feature occasion for the target index is skipped if any condition in a first condition set is satisfied; and the first condition set comprises: the first slot is not before the first change occasion, and the target slot is before the first change occasion.

27. The method for a second node according to any one of claims 22 to 26, wherein an information element BWP-Downlink used for configuring the same active BWP comprises a first parameter set, and within the same active BWP, parameters in the first parameter set are used before and after the first-type configuration change occurs; or an information element BWP-Uplink used for configuring the same active BWP comprises a first parameter set, and within the same active BWP, parameters in the first parameter set are used before and after the first-type configuration change occurs.

28. The method for a second node according to any one of claims 22 to 27, wherein a plurality of frequency band resources are configured for the same active BWP, and the first-type configuration change comprises switching between the plurality of frequency band resources within the same active BWP.
